# EUROPÄISCHE PATENTSCHRIFT

(11) **EP 2 103 481 B1**
(45) Veröffentlichungstag und Bekanntmachung des Hinweises auf die Patenterteilung: **10.09.2014**
(21) Anmeldenummer: 09002601.4
(22) Anmeldetag: 24.02.2009
(51) Int. Cl.: B60N 2/20, B60N 2/30

(54) **Fahrzeugsitz, insbesondere für ein Kraftfahrzeug und insbesondere Rücksitzbank, und Verfahren zur Montage eines Fahrzeugsitzes**
Vehicle seat, in particular for a motor vehicle and in particular rear seat bench and method for assembling a vehicle seat
Siège de véhicule, notamment pour un véhicule automobile et notamment banc de siège arrière, et procédé de montage d'un siège de véhicule

(30) Priorität: 20.03.2008 DE 102008015324; 04.11.2008 DE 102008055785
(43) Veröffentlichungstag der Anmeldung: 23.09.2009
(73) Patentinhaber: Johnson Controls GmbH, 51399 Burscheid (DE)
(72) Erfinder: Flucht, Stefan, 71126 Gäufelden (DE); George, Ian, TF6 6PR Little Bolas Telford (GB)
(74) Vertreter: Schwöbel, Thilo K.

(56) Entgegenhaltungen:
- WO-A1-01/94148
- DE-A1-102006 024 171

## Beschreibung

Die vorliegende Erfindung geht aus von einem Fahrzeugsitz, insbesondere für ein Kraftfahrzeug, mit einem Sitzteil und mit einem Lehnenteil, wobei das Lehnenteil gegenüber dem Sitzteil um eine erste Drehachse schwenkbar ausgebildet ist, wobei bei einer Verschwenkung des Lehnenteils in Richtung auf das Sitzteil eine Verlagerungsbewegung des Sitzteils vorgesehen ist. Die Erfindung geht insbesondere aus von einem Fahrzeugsitz nach dem Oberbegriff des Anspruchs 1. Ein derartiger Fahrzeugsitz ist aus der DE 10 2006 024 171 A1 bekannt.

Solche Fahrzeugsitze sind allgemein bekannt. Beispielsweise wird bei einem Fahrzeug während einer Verklappung der Rückenlehne aus der im Wesentlichen vertikalen Fahrposition in die etwa waagerechte Ladebodenposition, über einen Bowdenzug die Kissenkinematik angesteuert, damit das Kissen wiederum nach unten klappt und Platz für die Lehne schafft (Packageoptimierung). Ein solcher Fahrzeugsitz ist beispielsweise aus der Druckschrift DE 101 49 858 A1 bekannt.

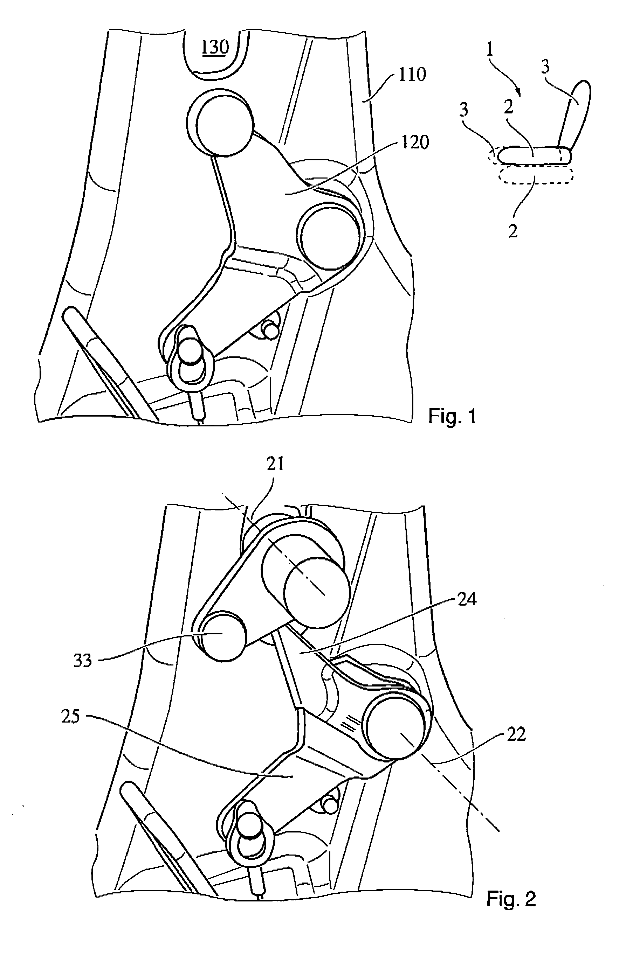

Gegenüber dem Fall, dass beispielsweise - wie gemäß der Figur 1 gemäß dem Stand der Technik dargestellt - mittels eines Pins (etwa befestigt an der Lehnendrehachse), welcher ab einem bestimmten Drehwinkel in Formschluss mit einem L-förmigen Betätigungshebel (befestigt am Kissenunterbau) tritt, die Betätigung der Kissenabsenkung erfolgt und über die Betätigung des L-förmigen Betätigungshebels wiederum der daran befestigten Bowdenzug (zur Kissenabsenkung) betätigt wird, kann es zu Montageschwierigkeiten dadurch kommen, dass bei bestimmten Montageverfahren keine eindeutige Montagerichtung des Lehnenteils in die Drehfallenschlösser des Kissenunterbaus (bzw. beim Vorhandensein von zwei Lehnenteilen bzw. Lehnen, etwa bei einer geteilten Rücksitzbanklehne zum Beispiel im Verhältnis von 40% der Gesamtbreite zu 60% der Gesamtbreite) sichergestellt werden kann. Daher kann für einen solchen Fall eine Falschmontage nicht ausgeschlossen werden, da ab einer Lehnenmontageposition (in Fahrtrichtung gesehen) vor der Vertikalen, das Risiko besteht, dass der Betätigungspin anstatt vor dem L-Hebel, hinter dem L-Hebel zu liegen kommt (in Fahrtrichtung betrachtet) oder aber diesen sogar beschädigt. In beiden Fällen wäre eine einwandfreie Funktion nicht gewährleistet.

Aufgabe der vorliegenden Erfindung ist, gattungsgemäße Fahrzeugsitze insbesondere im Hinblick auf eine Herstellbarkeit in Massenfertigung zu optimieren und/oder die Kinematik bzw. die Ansteuerung der Kinematik der Einstellung des Fahrzeugsitzes in eine Ladestellung zu verbessern und insbesondere Falschmontage bzw. Montagefehler weitestgehend bereits durch eine entsprechende Ausbildung des Fahrzeugsitzes entgegenzuwirken.

Die Aufgabe wird gelöst durch einen Fahrzeugsitz, insbesondere für ein Kraftfahrzeug, mit einem Sitzteil und mit einem Lehnenteil, wobei das Lehnenteil gegenüber dem Sitzteil um eine erste Drehachse schwenkbar ausgebildet ist, wobei bei einer Verschwenkung des Lehnenteils in Richtung auf das Sitzteil eine Verlagerungsbewegung des Sitzteils vorgesehen ist, wobei ferner zur Auslösung der Verlagerungsbewegung des Sitzteils die Drehung eines um eine zweite Drehachse drehbaren sitzteilseitigen Auslösehebels vorgesehen ist, wobei der Auslösehebel mit einem ebenfalls sitzteilseitigen Steuerhebel derart verbunden vorgesehen ist, dass das Lehnenteil und das Sitzteil im wesentlichen unabhängig von der Ausrichtung des Lehnenteils um die erste Drehachse verbindbar ist. Hierdurch ist es erfindungsgemäß vorteilhaft möglich, dass eine leichte und vor allem sichere Montage des Fahrzeugsitzes möglich ist, insbesondere für den Fall dass der Fahrzeugsitz derart in ein Fahrzeug eingebaut wird, dass zunächst das Sitzteil bzw. der Sitzunterbau des Fahrzeugsitzes mit der Fahrzeugkarosserie verbunden wird und erst in einem daran anschließenden Montageschritt das Lehnenteil mit dem Sitzteil bzw. dem Sitzunterbau verbunden wird. Dieser Vorteil wird.dadurch realisiert, dass kein starrer einteiliger Hebel zur Ansteuerung der Kinematik zur Absenkung bzw. Lagerveränderung des Sitzteils verwendet wird, sondern ein zweiteiliger Hebel umfassend einen sitzteilseitigen Steuerhebel und einen sitzteilseitigen Auslösehebel.

Besonders bevorzugt ist es vorgesehen, dass sowohl der Auslösehebel als auch der Steuerhebel um die zweite Drehachse drehbar sind. Hierdurch kann die Ansteuerung bzw. die Hebel- und Platzverhältnisse aus der Anordnung mit einem beispielsweise L-förmigen einteiligen Hebel im wesentlichen übernommen werden.

Erfindungsgemäß ist vorgesehen, dass zur Auslösung der Verlagerungsbewegung des Sitzteils die Drehung des Auslösehebels um die zweite Drehachse in eine Auslösedrehrichtung vorgesehen ist, wobei der Auslösehebel und der Steuerhebel in der Auslösedrehrichtung drehfest vorgesehen sind und wobei entgegen der Auslösedrehrichtung der Steuerhebel relativ zum Auslösehebel drehbar vorgesehen ist, und dass der Steuerhebel relativ zum Auslösehebel in der Auslösedrehrichtung federbeaufschlagt ist. Hierdurch ist es möglich, dass der Steuerhebel bei der Montage des Lehnenteils relativ zum Sitzteil aufgrund seiner nichtstarren Anbindung (bzw. zweiteiligen Auslegung mit dem Auslösehebel) ausweichen kann und so die Montage weniger fehlerträchtig und kostengünstiger gestaltet werden kann.

Erfindungsgemäß ist es weiter auch bevorzugt, dass das Lehnenteil einen Betätigungshebel aufweist, wobei bei einer Drehung des Lehnenteils um die erste Drehachse zumindest ab einer vorgegebenen Winkelstellung des Lehnenteils um die erste Drehachse ein Zusammenwirken des Betätigungshebels mit dem Steuerhebel zur Drehung des Auslösehebels um die zweite Drehachse vorgesehen ist. Hierdurch ist es erfindungsgemäß möglich, dass eine Einstellbarkeit des Lehnenteils in einem Komfortbereich vorgesehen sein kann, ohne dass eine Bewegung des Lehnenteils im Komfortbereich eine Absenkung oder sonstige Bewegung des Sitzteils bewirkt.

Weiterhin ist erfindungsgemäß auch bevorzugt, dass die Verlagerungsbewegung des Sitzteils im wesentlichen eine Absenkbewegung ist. Es kann hierdurch in einfacher und bauraumoptimierter Weise eine Ladeposition des Fahrzeugsitzes mit vorgeklapptem Lehnenteil realisiert werden.

Ferner ist es erfindungsgemäß auch bevorzugt, dass der Fahrzeugsitz als eine Sitzbank ausgebildet ist. Hierdurch kann der Fahrzeugsitz mit besonderem Vorteil als zweite und/oder dritte und/oder weitere Sitzbankreihe eines Fahrzeugs realisiert werden und aufgrund einer kompakten Einstellung in der Ladeposition eine besonders große Benutzungsvielfalt bzw. besonders vielfältige Fahrzeuginnenraumnutzungen erlauben.

Ein weiterer Gegenstand der vorliegenden Erfindung betrifft ein Verfahren zur Montage eines Fahrzeugsitzes, wobei in einem ersten Verfahrensschritt das Sitzteil mit einer Fahrzeugkarosserie verbunden wird und wobei in einem zweiten Verfahrensschritt das Lehnenteil mit dem Sitzteil verbunden wird, wobei der Bereich zulässiger Ausrichtungen des Lehnenteils relativ zum Sitzteil um die erste Drehachse während des zweiten Verfahrensschritts wenigstens einen Bereich von 20° aufweist, bevorzugt einen Bereich von wenigstens 40°, besonders bevorzugt einen Bereich von wenigstens 60° und ganz besonders bevorzugt einen Bereich von wenigstens 80°. Hierdurch kann erfindungsgemäß bei der Montage ein großer Bereich von möglichen Winkeleinstellungen des Lehnenteils zugelassen werden, ohne das Qualitätsniveau der Montage zu beeinträchtigen, was insgesamt die Montagefreundlichkeit erhöht und die Herstellungskosten des Fahrzeugsitzes bzw. eines mit einem solchen Fahrzeugsitz ausgestatteten Fahrzeugs reduziert.

Ausführungsbeispiele sind in der Zeichnung dargestellt und in der nachfolgenden Beschreibung näher erläutert.
Figur 1 zeigt eine schematische perspektivische Darstellung einer bekannten Ausbildung zur Ansteuerung der Sitzteilabsenkung mit einem einteiligen L-förmigen Hebel zu Ansteuerung der Sitzteilabsenkung.
Figur 2 zeigt eine schematische perspektivische Darstellung einer erfindungsgemäßen Ausbildung einer Hebelanordnung zur Ansteuerung der Sitzteilbewegung sowie im rechten Teil der Figur eine schematische Seitenansicht eines erfindungsgemäßen Fahrzeugsitzes.
Figuren 3 bis 7 zeigen weitere schematische Darstellungen der erfindungsgemäßen Ausbildung der Hebelanordnung zur Ansteuerung der Sitzteilbewegung.

In Figur 1 ist eine Darstellung einer bekannten Ausbildung zur Ansteuerung der Sitzteilabsenkung mit einem einteiligen L-förmigen Hebel 120 schematisch dargestellt. Der Kissenunterbau 110 bzw. ein sitzteilseitiges Strukturteil 110 weist eine Aufnahme 130 zur Montage des nicht dargestellten Lehnenteils auf. Ein Schwenkachsenzapfen oder ein ähnliches Element des Lehnenteils muss bei der Montage des Lehnenteils in die Aufnahme 130 zur Montage eingebracht werden. Damit liegt die genaue Position des Schwenkachsenzapfens oder äquivalentem Element zur Montage fest, nicht jedoch notwendigerweise die Dreheinstellung des Lehnenteils um diese Drehachse (Lehnenschwenkachse). Falls an dem Lehnenteil ein Auslöseelement (wie etwa ein Auslösepin; nicht dargestellt) angeordnet ist und das Lehnentei in einem falsche Drehwinkelbereich in die Aufnahme 130 eingebracht wird, kann es zu einer Falschmontage oder zu einer Beschädigung des einteiligen (insbesondere L-förmigen) Hebels 120 kommen.

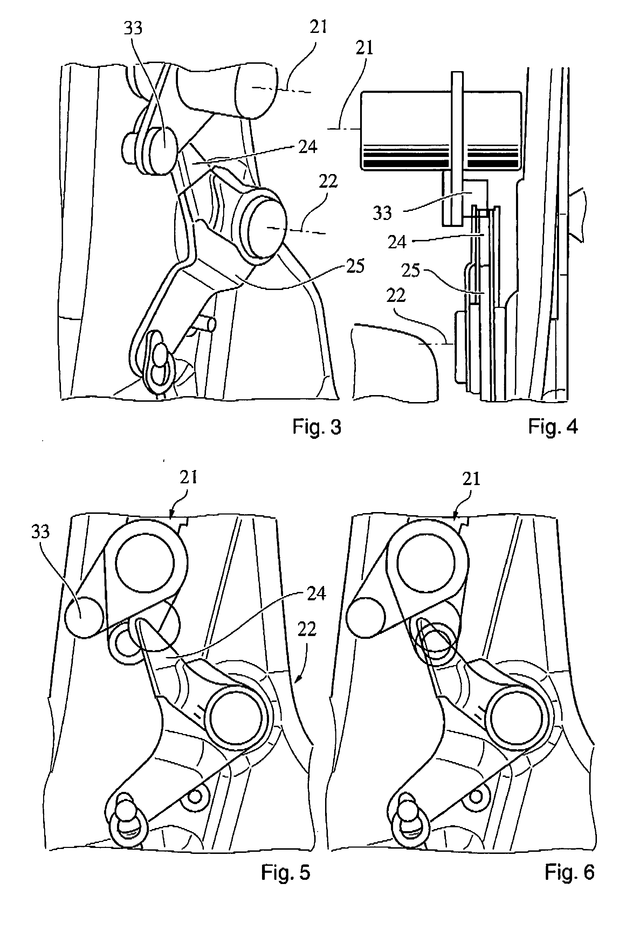

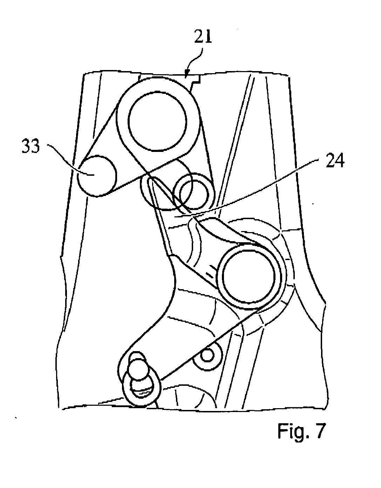

Die erfindungsgemäße Lösung ist anhand der Figuren 2 bis 7 dargestellt. Diese Figuren sind nachfolgend gemeinsam beschrieben. Ein erfindungsgemäßer Fahrzeugsitz 1 ist im rechten Teil der Figur 2 schematisch in Seitenansicht dargestellt und weist ein Sitzteil 2 und ein Lehnenteil 3 (bzw. eine Rückenlehne 3) auf. Das Lehnenteil 3 kann in Richtung auf das Sitzteil 2 zur Herbeiführung einer Ladeposition (nachfolgend auch Cargoposition genannt) des Fahrzeugsitzes 1 nach vorne geklappt bzw. geschwenkt werden. Diese Position des Lehnenteils 3 ist mit einer gestrichelten Linie im rechten Teil der Figur 2 dargestellt. Zur Herstellung einer bauraumkompakten Einstellung der Ladeposition des Fahrzeugsitzes 1, insbesondere zur Herstellung beispielsweise eines ebenen und möglichst tief liegenden bzw. möglichst durchgängigen Ladebodens (nicht dargestellt), kann bei diesem Vorklappen bzw. Vorschwenken des Lehnenteils 3 auch das Sitzteil 2 verlagert werden, insbesondere abgesenkt werden, was im rechten Teil der Figur 2 ebenfalls mit gestrichelter Linie angedeutet ist. Die Anordnung zur Ansteuerung der Sitzteilbewegung ist im linken der der Figur 2 in Seitendarstellung sowie in den Figuren 3 (perspektivische Darstellung) und 4 (Sicht von vorne) dargestellt. Zur Ansteuerung der Sitzteilbewegung dient erfindungsgemäß lehnenteilseitig ein Betätigungshebel 33, beispielsweise ein starr mit dem Lehnenteil 3 verbundener Zapfen oder ein Betätigungspin. Dieser ist insbesondere um eine erste Drehachse 21 drehbar, die der Drehachse bzw. Schwenkachse des Lehnenteils 3 zur Herbeiführung der Schwenkbewegung entspricht. Zur Ansteuerung der Sitzteilbewegung dient erfindungsgemäß sitzteilseitig ein zweiteiliger Hebel, der einen Steuerhebel 24 und einen Auslösehebel 25 aufweist, wobei sowohl der Steuerhebel 24 als auch der Auslösehebel 25 sitzteilseitig angeordnet ist und bevorzugt um eine gemeinsame zweite Drehachse 22 drehbar vorgesehen sind. Der Steuerhebel 24 ist im Ausführungsbeispiel federvorbelastet gegenüber dem Auslösehebel 25 derart vorgesehen, dass in einer ersten Drehrichtung der Steuerhebel 24 entgegen der Federkraft einer nicht dargestellten Feder gegenüber dem Auslösehebel 25 (zumindest in einem bestimmten Winkelbereich) gedreht werden kann, während in der der ersten Drehrichtung entgegengesetzten zweiten Drehrichtung (nachfolgend auch als Auslösedrehrichtung bezeichnet) der Steuerhebel 24 an dem Auslösehebel 25 anschlägt und somit beide in dieser Auslösedrehrichtung drehfest miteinander vorgesehen sind.

Bei der erfindungsgemäßen konstruktiven Lösung handelt es sich insbesondere bei dem Steuerhebel 24 und dem Auslösehebel 25 um einen zweiteiligen L-Hebel. Der bisherige L-Hebel wurde oberhalb seines Drehpunktes gekürzt bzw. in der Geometrie auf den zusätzlichen zweiten Teil hin optimiert (und bildet den Auslösehebel 25). Der zweite (obere) Hebelteil (oder auch Steuerhebel 24), ist auf derselben (zweiten) Drehachse 22 wie der untere Teil (Auslösehebel 25) gelagert und wird mittels insbesondere einer Drehfeder (nicht dargestellt) in der oben genannten Auslösedrehrichtung in eine formschlüssige Position zum unteren Teil gebracht. Diese Auslösedrehrichtung ist insbesondere entgegen der Fahrtrichtung vorgesehen.

In dieser formschlüssigen Position (zum unteren Teil bzw. zum Auslösehebel 25) befindet sich der obere Hebelteil (bzw. Steuerhebel 24) in Designlage, d.h. ein Betätigen über den Pin der Lehne (bzw. Betätigungshebel 33 des Lehnenteils 3) kann erfolgen. Voraussetzung hierfür ist, dass der Pin (bzw. der Betätigungshebel 33 des Lehnenteils 3) sich vor dem Steuerhebel 24 (in Fahrtrichtung gesehen) befindet (in Figur 2 auf der linken Seite des Steuerhebels 24), so dass auch der Kraftangriff von der richtigen Seite erfolgen kann.

Im Falle einer Falschmontage des Lehnenteils 3 würde der Pin 33 (nachfolgend synonym zum Betätigungshebel 33 verwendet) jedoch hinter dem L-Hebel (d.h. auf der rechten Seite des Steuerhebel 24) zu liegen kommen und im Falle des gemäß dem bekannten einteiligen Hebels (Figur 1) zu einer Verklemmung führen. Da jedoch der obere Teil (bzw. Steuerhebel 24) des zweiteiligen L-Hebels (in Fahrtrichtung betrachtet) in der Rotation nach vorne (entsprechen der oben genannten ersten Drehrichtung) frei ist bzw. federbelastet drehbar ist, wird der Pin 33 der Lehne 3, diesen oberen Teil (bzw. Steuerhebel 24) des L-Hebels, während der Rotation der Lehne 3 in eine aufrechte Position, nach vorne drücken (vgl. Figuren 5 bis 7), bis es schließlich zu einem Überspringen des Pin 33 und der Hebelspitze des Steuerhebels 24 kommt, d.h. der Pin 33 hat keinen Kontakt mehr zum Steuerhebel 24 und dieser wird von der Drehfeder wieder in die Ausgangslage mit Formschluss zum unteren Hebelteil (bzw. Auslösehebel 25) zurückgezogen. Somit befindet sich auch der Pin 33 der Lehne 3 vor dem oberen Hebelteil (bzw. Steuerhebel 24), d.h. eine Ansteuerung ist gewährleistet.

Erfindungsgemäß liegt ein Hauptvorteil darin, dass mittels des zweiteiligen L-Hebels (Steuerhebel 24 und Auslösehebel 25) eine Unempfindlichkeit des Systems gegen mögliche Falschmontage erreicht wird. Schwankungen der Einbaupositionen der Lehnen 3 werden kompensiert, bzw. der Montageprozess wird erheblich vereinfacht, da keine Winkelvorgaben bei der Lehnenmontage gemacht werden müssen. Risiken bezüglich Beschädigungen bzw. Funktionsausfall werden minimiert.

### Bezugszeichenliste

- 1: Fahrzeugsitz
- 2: Sitzteil
- 3: Lehnenteil
- 21: erste Drehachse
- 22: zweite Drehachse
- 24: Steuerhebel
- 25: Auslösehebel
- 33: Betätigungshebel
- 110: sitzteilseitiges Strukturelement (Kissenunterbau)
- 120: L-förmiger einteiliger Hebel
- 130: Aufnahme zur Montage des Lehnenteils

## Patentansprüche

1. Fahrzeugsitz (1), insbesondere für ein Kraftfahrzeug, mit einem Sitzteil (2) und mit einem Lehnenteil (3), wobei das Lehnenteil (3) gegenüber dem Sitzteil (2) um eine erste Drehachse (21) schwenkbar ausgebildet ist, wobei bei einer Verschwenkung des Lehnenteils (3) in Richtung auf das Sitzteil (2) eine Verlagerungsbewegung des Sitzteils (2) vorgesehen ist, wobei zur Auslösung der Verlagerungsbewegung des Sitzteils (2) die Drehung eines um eine zweite Drehachse (22) drehbaren sitzteilseitigen Auslösehebels (25) vorgesehen ist, wobei der Auslösehebel (25) mit einem ebenfalls sitzteilseitigen Steuerhebel (24) verbunden vorgesehen ist, **dadurch gekennzeichnet, dass** zur Auslösung der Verlagerungsbewegung des Sitzteils (2) die Drehung des Auslösehebels (25) um die zweite Drehachse (22) in eine Auslösedrehrichtung vorgesehen ist, wobei der Auslösehebel (25) und der Steuerhebel (24) in der Auslösedrehrichtung drehfest vorgesehen sind und wobei entgegen der Auslösedrehrichtung der Steuerhebel (24) relativ zum Auslösehebel (25) drehbar vorgesehen ist und der Steuerhebel (24) relativ zum Auslösehebel (25) in der Auslösedrehrichtung federbeaufschlagt ist, so dass das Lehnenteil (3) und das Sitzteil (2) im Wesentlichen unabhängig von der Ausrichtung des Lehnenteils (3) um die erste Drehachse (21) verbindbar sind.

2. Fahrzeugsitz (1) nach Anspruch 1, **dadurch gekennzeichnet, dass** sowohl der Auslösehebel (25) als auch der Steuerhebel (24) um die zweite Drehachse (22) drehbar vorgesehen sind.

3. Fahrzeugsitz (1) nach einem der vorhergehenden Ansprüchen, **dadurch gekennzeichnet, dass** das Lehnenteil (3) einen Betätigungshebel (33) aufweist, wobei bei einer Drehung des Lehnenteils (3) um die erste Drehachse (21) zumindest ab einer vorgegebenen Winkelstellung des Lehnenteils (3) um die erste Drehachse (21) ein Zusammenwirken des Betätigungshebels (33) mit dem Steuerhebel (24) zur Drehung des Auslösehebels (25) um die zweite Drehachse (22) vorgesehen ist.

4. Fahrzeugsitz (1) nach einem der vorhergehenden Ansprüchen, **dadurch gekennzeichnet, dass** die Verlagerungsbewegung des Sitzteils (2) im Wesentlichen eine Absenkbewegung ist.

5. Fahrzeugsitz (1) nach einem der vorhergehenden Ansprüchen, **dadurch gekennzeichnet, dass** der Fahrzeugsitz (1) als eine Sitzbank ausgebildet ist.

6. Verfahren zur Montage eines Fahrzeugsitzes (1) nach Anspruch 1, wobei in einem ersten Verfahrensschritt das Sitzteil (2) mit einer Fahrzeugkarosserie verbunden wird und wobei in einem zweiten Verfahrensschritt das Lehnenteil (3) mit dem Sitzteil (2) verbunden wird, wobei der Bereich zulässiger Ausrichtungen des Lehnenteils (3) relativ zum Sitzteil (2) um die erste Drehachse (21) während des zweiten Verfahrensschritts wenigstens einen Bereich von 20° aufweist, bevorzugt einen Bereich von wenigstens 40°, besonders bevorzugt einen Bereich von wenigstens 60° und ganz besonders bevorzugt einen Bereich von wenigstens 80°.

## Claims

1. A vehicle seat (1), in particular for a motor vehicle, comprising a seat part (2) and a backrest part (3), whereby the backrest part (3) relative to the seat part (2) moves around a first rotation axis (21), whereby in case of rotating the backrest part (3) in the direction of the seat part (2), a displacement movement of the seat part (2) is foreseen, whereby to release the displacement movement of the seat part (2), rotation around a second axis of rotation (22) of the rotatable seat part release lever (25) is foreseen, wherein the release lever (25) having a well-fitting lateral control lever (24) provided in connection to it, is **characterised in that**, to initiate the displacement movement of the seat part (2), the rotation of the release lever (25) around the second axis of rotation (22) into a release direction of rotation is foreseen, wherein the release lever (25) and the control lever (24) in the release direction can rotate, and wherein the opposite of the release direction of rotation of the control lever (24) relative to the release lever (25) also rotates and the control lever (24) relative to the release lever (25) is spring-loaded in the tripping direction of rotation, so that the backrest part (3) and the seat part (2), substantially independent of the orientation of the backrest part (3), are connected around the first axis of rotation (21).

2. A vehicle seat (1) according to Claim 1, is **characterised by** the fact that both of the release levers (25) and the control levers (24) can rotate around the second axis of rotation (22).

3. A vehicle seat (1) according to any of the preceding claims, is **characterised by** the fact that the backrest part (3) comprises an actuating lever (33), wherein during a rotation of the backrest part (3) around the first axis of rotation (21), at least in a predetermined angular position of the backrest part (3) around the first axis of rotation (21), an interaction of the actuating lever (33) with the control lever (24) for rotation of the release lever (25) around the second axis of rotation (22) is foreseen.

4. A vehicle seat (1) according to any of the preceding claims, is **characterised by** the fact that the displacement movement of the seat part (2) is substantially a lowering one.

5. A vehicle seat (1) according to any of the preceding claims, is **characterised by** the fact that the vehicle seat (1) is designed as a bench.

6. A method of assembling a vehicle seat (1) according to Claim 1, wherein in a first step of the method, the seat part (2) is connected to a vehicle body, and wherein in a second step of the method, the backrest part (3) is connected to the seat part (2), wherein the area of permissible orientations of the backrest part (3) relative to the seat part (2) around the first rotational axis (21) whereby the second step of the method disposes of a range of at least 20 °, preferably an area of at least 40 °, particularly preferred is an area of at least 60 ° and most preferred that of at least 80°.

## Revendications

1. Siège de véhicule (1), en particulier pour véhicule automobile, comportant une partie siège (2) et une partie dossier (2), la partie dossier (3) étant conçue de manière à pouvoir pivoter autour d'un premier axe de rotation (21) par rapport à la partie siège (2), dans lequel, lors d'un pivotement de la partie dossier (3) en direction de la partie siège (2), il est prévu un mouvement de déplacement de la partie siège (2), la rotation d'un levier de déclenchement (25) rotatif situé sur la partie siège autour d'un second axe de rotation (22) étant prévue pour déclencher le mouvement de déplacement de la partie siège (2), le levier de déclenchement (25) étant relié à un levier de commande (24) également situé sur la partie siège, **caractérisé en ce que**, pour déclencher le mouvement de déplacement de la partie siège (2), il est prévu la rotation du levier de déclenchement (25) dans un sens de déclenchement, le levier de déclenchement (25) et le levier de commande (24) étant conçus fixes en rotation dans le sens de déclenchement et le levier de commande (24) étant conçu de manière à pouvoir pivoter à l'inverse du sens de déclenchement du levier de commande (24) par rapport au levier de déclenchement (25) et le levier de commande (24) étant sollicité par ressort par rapport au levier de déclenchement (25) dans le sens de déclenchement, de sorte que la partie dossier (3) et la partie siège (2) peuvent être reliées sensiblement indépendamment de l'orientation de la partie dossier (3) autour du premier axe de rotation (21).

2. Siège de véhicule (1) selon la revendication 1, **caractérisé en ce qu'**aussi bien le levier de commande (24) sont conçus de manière à pouvoir pivoter autour du second axe de rotation (22).

3. Siège de véhicule (1) selon une des revendications précédents, **caractérisé en ce que** la partie dossier (3) présente un levier d'actionnement (33), sachant que, lors d'une rotation de la partie dossier (3) autour du premier axe de rotation (21) à partir d'une première position angulaire prédéfinie de la partie dossier (3) autour du premier axe de rotation (21), il est prévu une coopération du levier d'actionnement (33) avec le levier de commande (24) pour faire tourner le levier de déclenchement (25) autour du second axe de rotation (22).

4. Siège de véhicule (1) selon une des revendications précédents, **caractérisé en ce que** le mouvement de déplacement de la partie siège (2) est sensiblement un mouvement descendant.

5. Siège de véhicule (1) selon une des revendications précédents, **caractérisé en ce que** le siège de véhicule (1) se présente sous forme d'une banquette.

6. Procédé de montage d'un siège de véhicule (1) selon la revendication 1, dans lequel, dans une première étape opératoire, la partie siège (2) est raccordée à une carrosserie de véhicule et, dans une seconde étape opératoire, la partie dossier (3) est raccordée à la partie siège (2), la zone d'orientation admissible de la partie dossier (3) par rapport à la partie siège (2) autour du premier axe de rotation (21) pendant la seconde étape opératoire présentant une plage d'au moins 20°, de préférence une plage d'au moins 40°, très préférentiellement une plage d'au moins 60° et le plus préférentiellement d'au moins 80°.
